Europäisches Patentamt

European Patent Office

Office européen des brevets

(19)

(11) Publication number: **0 042 025**
**B1**

(12) **EUROPEAN PATENT SPECIFICATION**

(45) Date of publication of patent specification: **16.11.83**

(21) Application number: **80850090.4**

(22) Date of filing: **13.06.80**

(51) Int. Cl.³: **B 29 D  3/02,** B 29 D  9/00,
B 32 B  27/38

(54) Method of manufacturing structural members of epoxy resin.

(43) Date of publication of application:
**23.12.81 Bulletin 81/51**

(45) Publication of the grant of the patent:
**16.11.83 Bulletin 83/46**

(84) Designated Contracting States:
**AT BE CH DE FR GB IT LI LU NL**

(56) References cited:
**DE - A - 2 631 401**
**DE - B - 2 405 054**
**US - A - 3 959 544**

(73) Proprietor: **TÄTIS PLASTTÄTNINGAR AB**
**Flyghamnsvägen 22**
**S-183 64 Täby (SE)**

(72) Inventor: **Dahlberg, Anders**
**Flyghamnsvägen 22**
**S-183 64 Täby (SE)**

(74) Representative: **Modin, Jan et al,**
**c/o Axel Ehrners Patentbyra AB Box 5342**
**S-102 46 Stockholm (SE)**

Courier Press, Leamington Spa, England.

Method of manufacturing structural members of epoxy resin

The invention relates to a method of manufacturing a laminated structural member according to the first part of claim 1. Such a method is known (US—A—3959544). Epoxy plastics are used to an increasing extent in building industry, e.g. as a coating on concrete floors, as an adhesive and as an injection or repair material in concrete structures.

Epoxy plastics have a number of good qualities which are of considerable value in this connection, namely among others a strong adhesion to most materials, dimensional stability after hardening, low shrinkage, chemical resistance and electric insulating capacity. However, seen from an industrial hygienic point of view as well as a practical one, epoxy plastics are difficult to handle, especially because of their extreme adhesiveness.

The main object of the invention is to achieve a practically suitable and, from an industrial hygienc point of view, relatively harmless method to manufacture sheet or profile members of fabric reinforced epoxy plastic. This is accomplished by the inventive method, the basic features of which are stated in the appended claim 1. Suitable further features appear from the sub-claims.

Thus, in the method of manufacturing according to the invention, one starts out with a thin fabric reinforced layer. It is possible to produce such a layer by spreading out a sheet of fabric, preferably a polyester material, on a support which is not adhesive relative to epoxy plastic. A suitable material for this purpose has turned out to be a thermoplastic foil, such as a polyethylene or a PVC foil, which is first laid out on a firm, preferably planar support, such as a table or the like. Then, the fabric is soaked with an epoxy resin and a hardner, so that upon hardening a flexible fabric reinforced layer is obtained, which can easily be removed from the supporting foil.

The basic feature of the invention is to let such a reinforced layer, possibly divided into plates or strips, form a support when applying a much thicker intermediate layer consisting of an expoy resin, a preferably rather slow hardener and a thickening agent, such as an epoxy filler. The intermediate layer is smoothed, and a fluent epoxy resin is spread on. Then a reinforced fabric, preferably likewise a polyester material, is applied while being thoroughly drenched, so that another fabric reinforced layer is formed. Hereby, a kind of sandwich laminate is obtained, and the intermediate layer can maintain a substantially uniform thickness during the hardening process, even if the hardening takes place on a support having non-horizontal portions, e.g., for the manufacture of profile members.

. If so desired, in order to obtain a thicker and stronger laminate, it is possible to apply another thick intermediate layer (epoxy resin, a hardener and a thickening agent) on top of the reinforcement fabric before the first intermediate layer is hardened, as well as still another fabric reinforced layer, preferably of the kind as the first rather thin fabric reinforced layer. This outer fabric reinforced layer can also be divided into plates, strips or the like. However, the intermediate layers and reinforcement fabrics should be continuous so as to secure high strength even of the joints between different segments or the like of the finished sheet or profile member.

Upon application of all layers to be included in the laminated structural member, the laminate is permitted to finally harden on a support or a mould bed corresponding in shape to the desired final product, so that a rather rigid member will result. Of course, the hardened member can be further treated by grinding and/or applying more epoxy palstic on certain portions, but normally such further treatment is not necessary.

An essential advantage of the invention is that the member can be moved before the final harening process and be easily handled when being laid onto the support or the like. This is made possible by the already hardened, outer fabric reinforced layer which is dry and dimensionally stable, though somewhat resilient. In case the outer fabric reinforced layer is divided into strips or plates, which are to be mutually folded before the member is finally hardened, a tape can preferably be applied over the joints to prevent the escape and adhesion of the intermediate layer.

As to the handling of a member having two intermediate layers, it may be advantageous to apply each intermediate layer on a separate supporting fabric reinforced layer and thereafter put both units together while laying a reinforced fabric between the two intermediate layers.

A preferred embodiment of the invention will now be described with reference to the drawing.

Fig. 1 shows schematically in perspective view a fabric reinforced layer;

Fig. 2 shows in cross-section and in a larger scale a laminate before being hardened; and

Fig. 3 shows in cross-section the laminate laid on a support where it is permitted to harden.

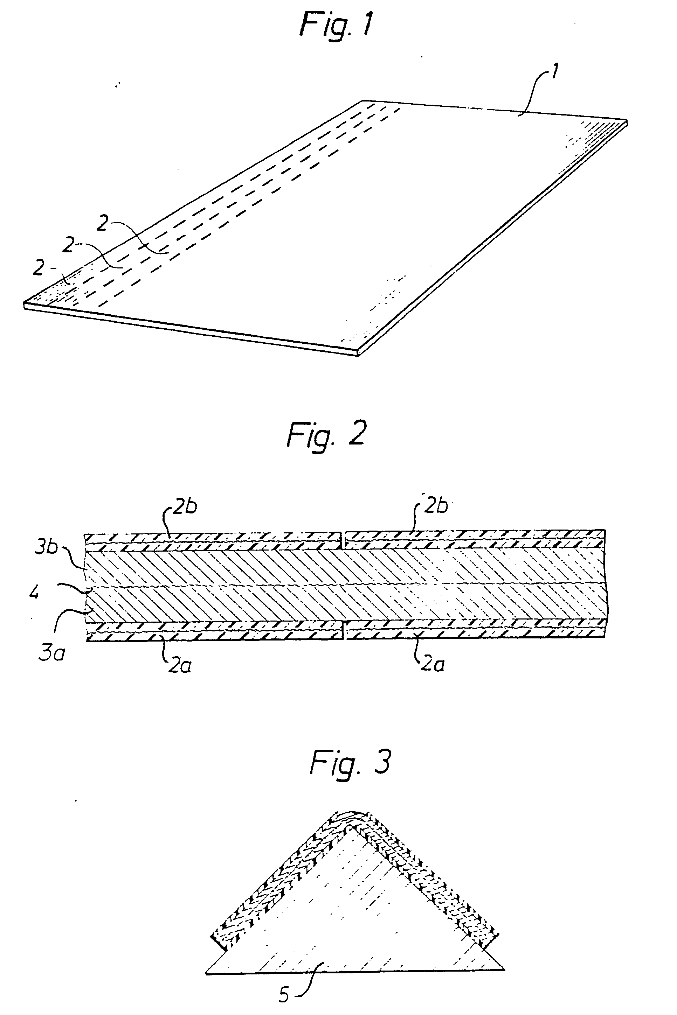

On a planar support a rather large and planar sheet (having the dimensions 0,5 x 1000 x 4500 mm) is produced. The sheet consists of a polyester fabric soaked with epoxy resin and a hardener so as to constitute, upon hardening, a thin and flexible sheet. Before applying the sheet, the support is provided with a polyethylene foil so as to permit easy removal of the sheet from the support and division of the sheet as desired, in this case into strips 2, indicated by dashed lines to the left in Fig. 1.

The division can be effected by sawing, shearing or cutting by means of a suitable tool.

For the manufacture of an elongated, angle profile member having mutually perpendicular and equally long legs, two strips 2a (0,5 × 40 × 4500 mm) are first laid out, one adjacent to the other on a planar support. Threafter, a first, rather thick (appr. 2 mm) intermediate layer 3a is applied. This layer, which consists of epoxy resin, a hardener and a thickening agent (such as epoxy putty), is smoothed and soaked with a fluent epoxy resin, whereupon a reinforcement fabric 4 is applied and soaked into the thin epoxy resin. Thereafer, a corresponding sheet member with two strips 2b and a second thick, still not harened intermediate layer 3b is laid on top of the reinforcement fabric 4, so as to form a symmetrical, still not hardened laminate unit 2a, 3a, 4, 3b, 2b.

This laminate unit is laid on a support 5 having mutually perpendicular support surfaces, as indicated in Fig. 3. Upon hardening, the desired L-profile member of fabric reinforced epoxy plastic is obtained.

## Claims

1. A method of manufacturing laminated structural members of plastics material, wherein the member is formed by a surface layer of reinforcement fabric soaked with plastics material, at least one intermediate layer and other surface layer of reinforcement fabric soaked with plastics material, characterized by the following steps:
— the reinforcement fabric, preferably of polyester material, is soaked with epoxy resin and a hardener, such that a first, thin, flexible fabric reinforced layer is formed upon hardening;
— on such a hardened layer, a much thicker layer consisting of epoxy resin, a hardener and a thickening agent is applied so as to form a thick intermediate layer;
— on said intermediate layer, a fluent epoxy resin, a hardener and a reinforcement fabric is applied while soaking the latter so as to form a second, thin fabric reinforced layer, and possibly also applying at least one more thick intermediate layer as well as at least a third, thin fabric reinforced layer; whereupon
— the resulting laminate product, which has not yet hardened beyond the first layer, is placed on a planar or profiled support to permit hardening and the forming of a relatively rigid structural member.

2. A method as defined in claim 1, characterized in that said first fabric reinforced layer is produced by firstly spreading out said reinforcement fabric on a thermoplastic foil, which is not adhesive relative to the epoxy resin, such as a polyethylene or a PVC foil.

3. A method as defined in claim 2, characterized in that said first fabric reinforced layer is made as a relatively large sheet to be divided into desired dimensions.

4. A method as defined in claim 3, characterized in that said sheet is divided into strips which are placed adajacent to each other in each fabric reinforced layer.

## Revendications

1. Procédé de fabrication d'éléments de structure stratifiés en matière plastique, dans lequel l'élément est formé par une couche superficielle d'étoffe de renforcement imprégnée de matière plastique, par au moins une couche intermédiaire et par une autre couche superficielle d'étoffe de renforcement imprégnée de matière plastique, caractérisé par les opérations suivantes:
— on imprègne l'étoffe de renforcement, de préférence en matière de polyester, de résine époxy et d'un durcisseur, de façon qu'il se forme après durcissement une première couche mince flexible renforcée par l'étoffe;
— sur une telle couche durcie, on applique une couche beaucoup plus épaisse composée de résine époxy, d'un durcisseur et d'un agent épaississeur de façon à former une couche intermédiaire épaisse;
— sur ladite couche intermédiaire, on applique une résine époxy fluide, un durcisseur et une étoffe de renforcement en imprégnant cette dernière de façon à former une seconde couche mince renforcée par de l'étoffe, et éventuellement on applique aussi au moins encore une couche intermédiaire plus épaisse ainsi qu'au moins une troisième couche mince renforcée par de l'étoffe, après quoi
— on place le produit stratifié résultant, qui n'a pas encore durci au-delà de la première couche, sur un support plan ou profilé pour permettre le durcissement et la formation d'un élément de structure relativement rigide.

2. Procédé selon la revendication 1, caractérisé en ce qu'on produit ladite première couche renforcée par de l'étoffe en étalant d'abord ladite étoffe de renforcement sur une feuille thermoplastique, non adhésive vis-à-vis de la résine époxy, telle que feuille de polyéthylène ou de chlorure de polyvinyle.

3. Procédé selon la revendication 2, caractérisé en ce qu'on fabrique ladite première couche renforcée par de l'étoffe sous forme de feuille relativement grande pour être divisée en dimensions désirées.

4. Procédé selon la revendication 3, caractérisé en ce qu'on divise ladite feuille en bandes qu'on place l'une près de l'autre dans chaque couche renforcée par de l'étoffe.

## Patentansprüche

1. Ein Verfahren zum Herstellen laminierter Strukturteile aus Kunststoffmaterial, bei dem das Teil durch eine Oberflächenschincht aus mit Kunststoffmaterial getränktem Verstärkungsgewebe, wenigstens eine Zwischenschicht und eine weitere Oberflächenschicht aus mit Kunststoffmaterial getränktem Verstärkungsgewebe gebildet wird, gekennzeichnet durch die folgenden Schritte:

— das Verstärkungsgewebe, vorzugsweise aus Polyestermaterial, wird mit Epoxyharz und einem Härter getränkt, so daß nach dem Härten eine erste dünne, flexible, gewebeverstärkte Schicht gebildet wird;

— auf eine solche gehärtete Schicht wird eine weit dickere Schicht bestehend aus Epoxyharz, einem Härter und einem Verdickungsmittel aufgebracht, so daß sich eine dicke Zwischenschicht ergibt;

— auf diese Zwischenschicht wird ein flüssiges Epoxyharz, ein Härter und ein Verstärkungsgewebe aufgebracht, während das letztere derart durchtränkt wird, daß sich eine zweite dünne, gewebeverstärkte Schicht bildet, und eventuell wird auch noch wenigstens eine dickere Zwischenschicht sowie wenigstens eine dritte dünne, gewebeverstärkte Schicht aufgebracht; worauf

— das resultierende Laminaterzeugnis, das außer der ersten Schicht noch nicht ausgehärtet ist, auf einen ebenen oder profilierten Träger gelegt wird, um die Aushärtung und Bildung eines relativ starren Strukturteils zu ermöglichen.

2. Ein Verfahren nach Anspruch 1, dadurch gekennzeichnet, daß die erste gewebeverstärkte Schicht dadurch hergestellt wird, daß man zunächst das Verstärkungsgewebe auf einer thermoplastischen Folie ausbreitet, die gegenüber dem Epoxyharz nichtklebend ist, wie insbesondere Polyäthylen- oder PVC-Folie.

3. Ein Verfahren nach Anspruch 2, dadurch gekennzeichnet, daß die erste gewebeverstärkte Schicht mit einer relativ großen Fläche hergestellt wird, die in die gewünschten Abmessungen unterteilbar ist.

4. Ein Verfahren nach Anspruch 3, dadurch gekennzeichnet, daß die genannte Fläche in Streifen unterteilt wird, die in jede gewebeverstärkte Schicht aneinander anstoßend gelegt werden.

## Fig. 1

## Fig. 2

## Fig. 3